(19) Europäisches Patentamt
European Patent Office
Office européen des brevets

(11) Veröffentlichungsnummer: **0 180 829 B1**

(12) # EUROPÄISCHE PATENTSCHRIFT

(45) Veröffentlichungstag der Patentschrift: 24.07.91

(51) Int. Cl.⁵: **B23Q 7/04**

(21) Anmeldenummer: **85113227.4**

(22) Anmeldetag: **18.10.85**

(54) Vertikal arbeitende Werkzeugmaschine mit Handhabungsgerät.

(30) Priorität: **08.11.84 DE 3440762**

(43) Veröffentlichungstag der Anmeldung:
**14.05.86 Patentblatt 86/20**

(45) Bekanntmachung des Hinweises auf die
Patenterteilung:
**24.07.91 Patentblatt 91/30**

(84) Benannte Vertragsstaaten:
**DE FR GB IT SE**

(56) Entgegenhaltungen:
**DE-A- 2 914 352**
**DE-A- 2 942 060**
**FR-A- 2 192 886**
**GB-A- 1 442 598**

**MACH'PRO, 24. Oktober 1984, Seiten 21-24;**
**PITTLER: "Du tour à CNC à la ligne flexible"**

**MACHINE MODERNE, März 1978, Seite 79;**
**"Industrial handling"**

(73) Patentinhaber: **PITTLER Maschinenfabrik AG**
**Pittlerstrasse 6**
**W-6070 Langen(DE)**

(72) Erfinder: **Kieselbach, Frank**
**Uhlandstrasse 32**
**W-6070 Langen(DE)**
Erfinder: **Baumbusch, Frank**
**Höhfeldstrasse 30**
**W-6930 Eberbach-Friedrichsdorf(DE)**

(74) Vertreter: **Jochem, Bernd, Dipl.-Wirtsch.-Ing.**
**et al**
**Patentanwälte Beyer & Jochem Postfach 17**
**01 45**
**W-6000 Frankfurt/Main(DE)**

**Beschreibung**

Die Erfindung betrifft vertikal arbeitende Werkzeugmaschinen mit einem oder mehreren an einer Wand geführten Werkzeugschlitten und Werkstücktransport zwischen wenigstens zwei Positionen auf der einen Seite der Wand mittels eines auf der anderen Seite der Wand gelagerten Handhabungsgeräts durch wenigstens zwei horizontal nebeneinander angeordnete Wanddurchbrüche hindurch.

Es scheint zunächst das Einfachste zu sein, bei derartigen Werkzeugmaschinen automatisierte Einrichtungen für den Werkstücktransport, mit deren Hilfe Werkstücke z. 9. auf einem Arbeitstisch oder einer Arbeitsspindel in Spannstellung positioniert, wieder abgenommen, gewendet und zu einer anderen Arbeits- oder Zwischenlagerposition transportiert werden, auf der Vorderseite der Maschine, d. h. vor der genannten Wand anzuordnen, wo sich auch die Spannpositionen und Werkzeuge befinden. Andererseits ist man bestrebt, die Vorderseite der Maschine als Bedienungsseite möglichst frei und gut zugänglich zu halten. Daher ist es schon bekannt, die Werkstücke durch Durchbrüche in der den oder die Werkzeugschlitten tragenden Wand hindurch, also von der Rückseite der Maschine aus, mittels Greifern an die Spannpositionen heranzuführen. Dabei ist zu beachten, daß die Durchbrüche in der die Schlittenführung für die Werkzeugschlitten tragenden Wand möglichst klein sein sollen, um die Steifigkeit der Wand zu erhalten. Man sieht daher bei mehreren Spann- und/oder Lagerpositionen auf der Vorderseite der Wand nicht eine große Öffnung, sondern mehrere kleine Durchbrüche vor, und die bisher eingesetzten Handhabungsgeräte mit einem in zwei Achsen in Längs- und Querrichtung zur Wand steuerbaren Greiferarm schienen der Bauform dieser Art von Werkzeugmaschinen am besten zu entsprechen.

Aus der Zeitschrift "MACH' PRO" vom 24.10.1984, Seiten 23/24 ist auch bereits eine Werkzeugmaschine der genannten Art mit einem Handhabungsgerät bekannt, welches einen um eine senkrechte Schwenkachse drehbaren und radial ausfahrbaren Arm aufweist. Dabei besteht ebenfalls der Nachteil, daß zwei Bewegungen gesteuert werden müssen, nämlich die Drehbewegung des Arms entsprechend dem Weg längs der Wand und die radiale Ausfahrbewegung, um mit dem freien Ende des Arms durch die im Abstand angeordneten Wanddurchbrüche hindurchzufahren.

Daneben ist aus der DE-A-23 35 605 für einen einfachen hin und her führenden Transport der Werkstücke einer Drehmaschine auf einer schwach gekrümmten Bahn der Einsatz eines Handhabungsgeräts mit einem Knickarm bekannt. Der Transport erfolgt in diesem Fall auf dem kleineren Bogen zwischen den anzufahrenden Positionen.

Der Erfindung liegt die Aufgabe zugrunde, die bekannten Werkzeugmaschinen mit Werkstück-Transporteinrichtungen ohne nachteilige Folgen für die Arbeitsgeschwindigkeit und Genauigkeit in ihrem Aufbau und im Betrieb zu vereinfachen und dadurch auch die Funktionssicherheit zu verbessern.

Vorstehende Aufgabe wird erfindungsgemäß dadurch gelöst, daß das Handhabungsgerät einen um eine senkrechte Schwenkachse drehbaren zweiteiligen Knickarm aufweist, dessen Knickbewegung durch Zwangsführung von seiner Drehbewegung abgeleitet ist und dessen Knickgelenk sich beim Verfahren von einer zur anderen Postition auf dem größeren Bogen des Kreises seiner Bahn bewegt, wobei der äußere Teil des Knickarms in den Endstellungen, in welchen er sich durch die Wanddurchbrüche erstreckt, im wesentlichen parallele Lagen einnimmt.

Der wesentliche Vorteil der Erfindung besteht darin, daß die Steuervorrichtung des Handhabungsgeräts trotz der geschilderten Erschwernisse infolge des notwendigen Transports der Werkstücke durch die Wand hindurch und in deren Längsrichtung von dem einen zum anderen Durchbruch als einfache einachsige Steuerung ausgebildet werden kann. Damit entfallen der technische Aufwand, die Komplizierung der Bedienung und das Störungsrisiko für die bisher bei gleicher Funktion notwendige zweite steuerbare Achse. Außerdem ist auch der mechanische Aufwand für einen nur zwei Drehgelenke aufweisenden Greiferarm geringer als bei den bisher eingesetzten Handhabungsgeräten mit zwei Längsführungen.

Das Schwenklager des Knickarms wird vorzugsweise unmittelbar hinter der Wand im Bereich zwischen zwei Durchbrüchen angeordnet. Bei der Bewegung aus der einen in die andere Endstellung bewegt sich der hintere Teil des Knickarms aus dem einen Wanddurchbruch heraus, im großen Bogen um mehr als 180° Grad zum anderen Wanddurchbruch hin und in diesen hinein. Vorzugsweise erstrecken sich die Seitenflächen der Wanddurchbrüche entsprechend den Endstellungen des Knickarms beim Hindurchreichen durch die Wand im Winkel zueinander, so daß die Wand nur minimal geschwächt wird. Während der gesteuerten Schwenkbewegung des hinteren Teils des Knickarms wird jeweils dessen vorderer (äußerer) Teil durch die Zwangsführung um die Achse des Knickgelenks gedreht. Dazu bedarf es keiner weiteren Steuerung. Vorzugsweise ist der vordere Teil des Knickarms kürzer als der hintere und dreht sich infolge der Zwangsführung in entgegengesetzter Richtung um die Achse des Knickgelenks wie sich der hintere Teil des Knickarms um die Schwenkachse dreht. In einer praktischen Ausführung hat bei einem Zwischenabstand von etwa 130 cm der beiden anzufahrenden Spannpositionen auf der Vorderseite der Wand der hintere Teil des Knickarms eine Länge von etwa 100 cm und der vordere Teil eine Länge von etwa 60 cm. Die Übersetzung zwischen der Drehbewegung um die Schwenkachse und der Drehbewegung um die Achse des Knickgelenks beträgt etwa 1:1.

Beim Werkstücktransport muß das Werkstück zunächst von einer Position zur anderen gebracht und dann normalerweise durch eine relative Vertikalbewegung zum Arbeitstisch oder der Arbeitsspindel daran zur Anlage gebracht werden. Diese Vertikalbewegung kann in zweckmäßiger Weiterbildung der Erfindung dadurch ermöglicht werden, daß der Knickarm insgesamt oder sein äußerer Teil axial bewegbar ist.

Oft müssen Werkstücke auf dem Weg von der einen zur anderen Spann- und Bearbeitungsposition gewendet werden, z. B., um sie auf beiden Seiten zu bearbeiten. Zu diesem Zweck kann erfindungsgemäß vorgesehen sein, daß am äußeren Ende des Knickarms ein um eine senkrecht zur Schwenkachse liegende Achse drehbarer Werkstück-Greifer gelagert ist. In diesem Fall werden die Werkstücke durch den Greifer gewendet. Daneben besteht alternativ die Möglichkeit, daß sich auf derjenigen Seite der Wand, auf welcher der Knickarm gelagert ist, an einer weiteren vom Handhabungsgerät anzufahrenden Position eine Einrichtung zum Wenden der Werkstücke befindet. Der Greifer des Handhabungsgeräts nimmt im letzteren Fall ein Werkstück, welches z. B. in der einen Arbeitsposition auf einer Seite fertig bearbeitet worden ist, dort auf, zieht es durch den einen Wanddurchbruch zur Rückseite der Wand zurück, übergibt es der Wendeeinrichtung, nimmt es nach dem Wenden von dieser wieder auf und transportiert es durch den anderen Wanddurchbruch zu der anderen Arbeitsposition, wo es dann auf der zweiten Seite bearbeitet wird.

Die Erfindung schließt nicht aus, daß das Handhabungsgerät mit seinem Knickarm insgesamt längs der Rückseite der Wand verfahrbar ist, um z. B. mehr als zwei Arbeitspositionen zu erreichen oder um z. B. Werkstücke am Ende der Wand aufzunehmen oder abzulegen. Weitere Ausgestaltungen der Erfindung sehen vor, daß auf derselben Seite der Wand zwei oder mehr Handhabungsgeräte mit Knickarm gelagert sind und durch wenigstens einen Wanddurchbruch zwei Knickarme an dieselbe Arbeits- oder Zwischenlagerposition heranreichen. Eine solche Ausführung kann sich z. B. dann empfehlen, wenn sehr kurze Zykluszeiten für den Werkstücktransport angestrebt werden. In disem Zusammenhang könnte gegebenenfalls auch eine Ausführung der erfindungsgemäßen Vorrichtung zur Anwendung kommen, bei welcher auf derselben Schwenkachse zwei Knickarme gelagert sind.

Eine besonders einfache Ausgestaltung der Zwangsführung des vorderen Teils des Knickarms relativ zu dessen hinteren Teil wird dadurch erreicht, daß eine Kette oder ein Zahnriemen ein undrehbar auf der Schwenkachse festgehaltenes und ein drehfest an dem vorderen Teil des Knickarms angeordnetes Zahnrad verbindet.

Die Erfindung wird nachstehend anhand der in der Zeichnung gezeigten Ausführungsbeispiele näher erläutert. Es zeigen:

Fig. 1    eine perspektivische Ansicht von hinten einer teilweise aufgebrochen gezeigten Werkzeugmaschine mit Handhabungsgerät gemäß der Erfindung;

Fig. 2    einen schematischen Längsschnitt durch die Lager des Knickarms des in Fig. 1 gezeigten Handhabungsgeräts zur Veranschaulichung der Zwangsführung des vorderen Teils des Knickarms;

Fig. 3    eine Ausführung der erfindungsgemäßen Werkzeugmaschine mit zwei Handhabungsgeräten.

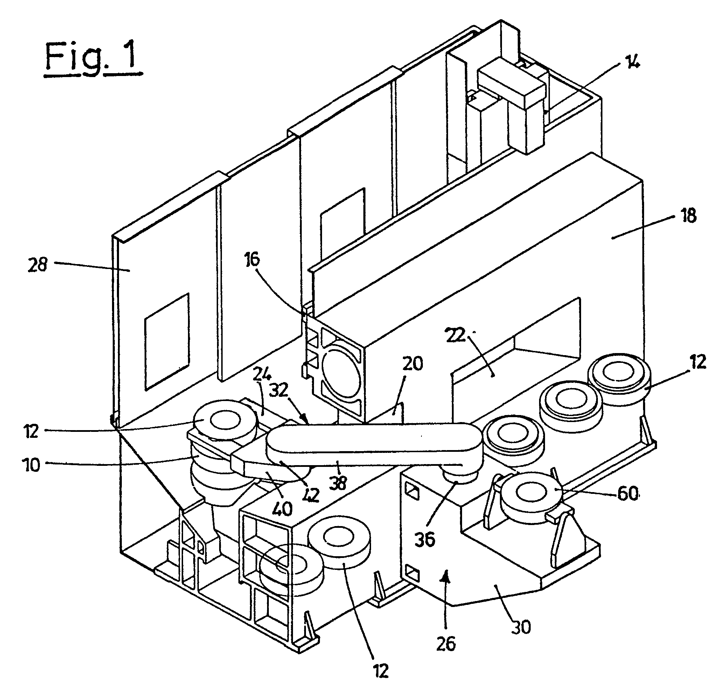

Die in Fig. 1 gezeigte vertikal arbeitende Werkzeugmaschine hat zwei Arbeitspositionen, von denen eine bei 10 gezeigt ist. Dort werden Werkstücke 12 zur Bearbeitung auf einem Arbeitstisch oder einer Drehspindel festgespannt. Die Werkzeuge zur Bearbeitung der Werkstücke 12 sind an einem Werkzeugschlitten 14 befestigt, der längs einer horizontalen Schlittenführung 16 an einer Wand 18 verfahrbar ist. Letztere hat neben den beiden Arbeitspositionen 10 jeweils einen Durchbruch 20 bzw. 22, damit ein mit 24 bezeichneter Greifer eines Handhabungsgeräts 26 die Werkstücke 12 von der Rückseite der Wand 18 aus durch die Wand hindurch zu den Arbeitspositionen 10 transportieren und von dort wieder zurückholen kann. Die Zuführung der Werkstücke 12 von der Rückseite der Maschine aus bietet den Vorteil, daß der Bewegungs- und Arbeitsraum der Werkzeuge und des Bedienungspersonals nicht durch den Werkstücktransport beeinträchtigt werden. Im Beispielsfall ist der Arbeitsraum der Maschine durch eine vordere Schutzwand 28 abgeschirmt.

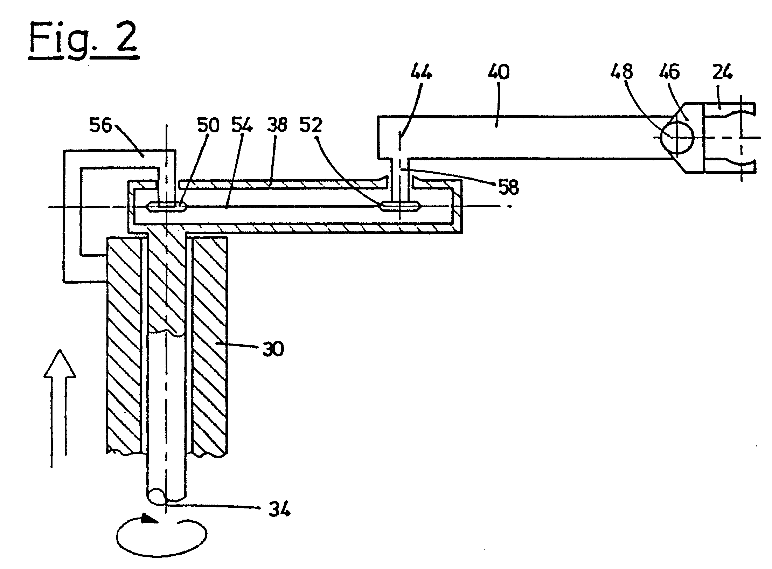

Das Handhabungsgerät 26 ist bei der Ausführung nach Fig. 1 ortsfest genau in der Mitte zwischen den beiden Wanddurchbrüchen 20 und 22 gelagert. Es besteht aus einem Gehäuse 30, an dessen Oberseite ein Knickarm 32 um eine senkrechte Drehachse 34 (siehe Fig. 2) über einen Winkelbereich von etwa 240° bis 320° Grad schwenkbar gelagert ist. In Fig. 1 ist das Schwenklager bei 36 angedeutet. Der Knickarm 32 besteht aus einem hinteren Teil 38 und einem vorderen Teil 40, die beide über ein bei 42 angedeutetes Knickgelenk, dessen in Fig. 2 mit 44 bezeichnete Drehachse parallel zur Schwenkachse 34 liegt, miteinander verbunden sind. Am freien Ende des vorderen Teils 40 des Knickarms 32 ist der Greifer 24 angebracht. Dabei können die Greiferzangen z. B. gemäß Fig. 1 unmittelbar am vorderen Teil 40 des Knickarms gelagert oder z. B. gemäß Fig. 2 an einem Handteil 46 gelagert sein, welches seinerseits über ein Gelenk 48 mit dem vorderen Knickarmteil 40 verbunden ist.

Nur die Bewegung des hinteren Knickarmteils 48 um die Schwenkachse 34 wird durch eine z. B. im Gehäuse 30 oder in einem neben der Werkzeugmaschine aufgestellten Gehäuse aufgenommene Steuervorrichtung gesteuert. Zwischen den beiden Teilen 38 und 40 des Knickarms 32 besteht eine Zwangsführung, die z. B. von der in Fig. 2 gezeigten Art sein kann. Sie besteht aus zwei Zahnrädern oder Zahnriemenscheiben 50 und 52, die durch eine Kette oder einen Zahnriemen 54 miteinander verbunden sind. Das eine Zahnrad 50 ist auf der Schwenkachse 34 angeordnet und wird durch eine geeignete Halterung 56 relativ zum Gehäuse 30 drehfest gehalten. Das andere Zahnrad 52 ist auf der Achse 44 des Knickgelenks angeordnet und durch eine Welle 58 drehfest mit den vorderen Teil 40 des Knickarms 32 verbunden. Abweichend von Fig. 2, wo nur das Funktionsprinzip der Zwangsführung des vorderen Knickarmteils 40 dargestellt ist, zeigt Fig. 1 die Anordnung und das Größenverhältnis einer praktischen Ausführungsform, bei der der vordere Knickarmteil 40 samt Greifer 24 kürzer ist als der hintere Knickarmteil 38. Diese Ausbildung des Knickarms sowie die im Zusammenhang mit Fig. 2 beschriebene Zwangsführung 50, 52, 54 ergeben bei der gesteuerten Schwenkbewegung des hinteren Knickarmteils 38 aus der in Fig. 1 gezeigten Position entgegen dem Uhrzeigersinn von dem Wanddurchbruch 20 zum Wanddurchbruch 22 hin eine Zwischenstellung, bei welcher der hintere Knickarmteil 38 eine quer zur Wand 18 liegende Stellung einnimmt, während sich gleichzeitig auch der vordere Knickarmteil 40 quer zur Wand 18 erstreckt, so daß sich beide Knickarmteile in der Draufsicht decken und dabei das freie Ende des vorderen Knickarmteils 40 zur Schwenkachse 34 weist. Im Beispielsfall nach Fig. 1 befindet sich in dieser Zwischenstellung eine Wendeeinrichtung 60, auf welcher jeweils ein Werkstück 12 vom Greifer 34 abgesetzt werden kann, das dann nach dem Wenden, bei dem die Unterseite nach oben gedreht wird, vom Greifer 24 wieder aufgenommen wird. Danach führt die gesteuerte Schwenkbewegung den hinteren Knickarmteil 38 in den Wanddurchbruch 22 hinein, und gleichzeitig dreht die Zwangsführung 50, 52, 54 auch den vorderen Knickarmteil 40 relativ zum hinteren weiter, so daß er in der anderen Endstellung des Knickarms wieder in eine zu der in Fig. 1 gezeigten im wesentlichen parallele Lage kommt, in welcher das gewendete Werkstück 12 in der nicht gezeigten Arbeitsposition hinter dem Wanddurchbruch 22 abgesetzt wird. Um die Aufnahme- und Absetzbewegungen in den Arbeitspositionen 10 und in der Zwischenposition bei der Wendeeinrichtung 60 zu bewerkstelligen, wird im Beispielsfall der gesamte Knickarm 32 längs der Schwenkachse 34 angehoben und abgesenkt.

Derselbe Schwenkarm, der die Werkstücke 12 aus der einen Arbeitsposition 10 neben dem Wanddurchbruch 20 durch die Wand 18 hindurch zu der anderen Arbeitsposition neben dem Wanddurchbruch 22 transportiert, Kann auch dazu benutzt werden, die Werkstücke von einem nicht gezeigten Förderorgan, welches sie vor oder hinter der Wand 18 heranführt, aufzunehmen und in die erste Arbeitsposition 10 zu bringen und/oder die auch in der zweiten Arbeitsposition fertig bearbeiteten Werkstücke dort aufzunehmen und an ein weiterführendes Förderorgan, z. B. einen Bandförderer, zu übergeben, denn es können mit dem Greifer 24 eine beliebige Vielzahl von Zwischenstellungen auf beiden Seiten der Wand 18 angefahren werden.

Wie aus Fig. 1 ersichtlich, nimmt der hintere Knickarmteil 38 in den beiden Endstellungen, in welchen sich der Greifer 24 an den beiden Arbeitspositionen 10 befindet, relativ zur Wand 18 jeweils eine Schräglage ein. In Anpassung an diese Schräglagen des hinteren Knickarmteils 38 können die Seitenwände der Wanddurchbrüche 20 und 22 ebenfalls schräg ausgebildet sein, um die Wand so wenig wie möglich zu schwächen.

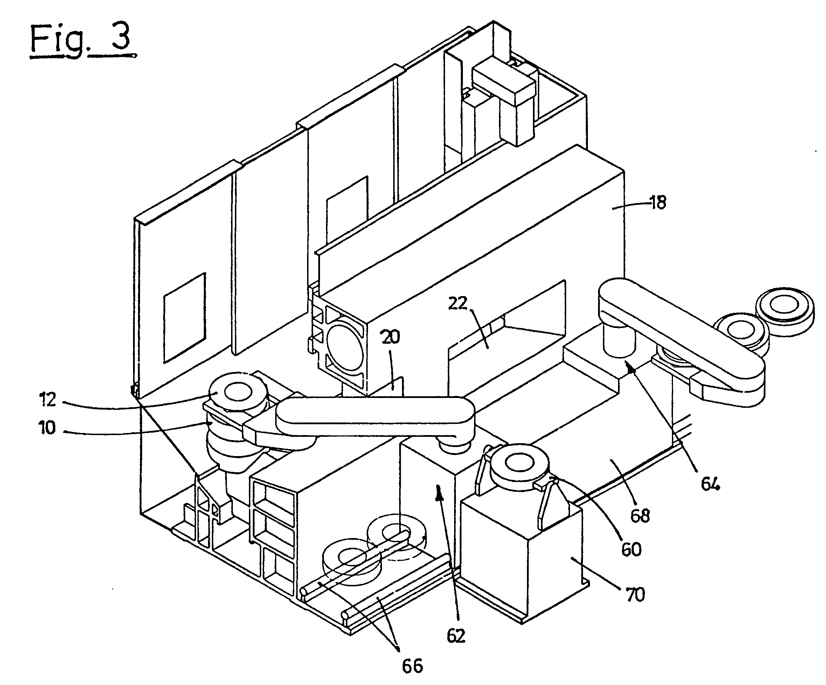

Die Ausführung nach Fig. 3 unterscheidet sich von der nach Fig. 1 nur dadurch, daß auf der Rückseite der Wand 18 zwei Handhabungsgeräte 62, 64 statt des einen Handhabungsgeräts 26 gemäß Fig. 1 angeordnet sind. Damit lassen sich die Transportzeiten abkürzen. Beide Handhabungsgeräte 62 und 64 entsprechen in ihrem Aufbau und in ihrer Wirkungsweise dem Handhabungsgerät 26. Im Ausführungsbeispiel nach Fig. 3 sind sie durch ein gemeinsames, auf Schienen 66 längs der Rückseite der Wand 18 verfahrbares Gehäuse 68 miteinander verbunden. Die Wendeeinrichtung 60 ist bei der Ausführung nach Fig. 3 auf einem besonderen Gehäuse 70 gelagert.

Die Arbeitsteilung zwischen den beiden Handhabungsgeräten 62 und 64 ist so vorgenommen, daß das erstere die Werkstücke 12 gegebenenfalls von einem sie heranführenden Transportorgan aufnimmt, der ersten Arbeitsposition 10 zuführt, sie von dort zur Wendeeinrichtung 60 bringt und von dort weiter zur zweiten Arbeitsposition vor dem Wanddurchbruch 22 transportiert. Das andere Handhabungsgerät 64 nimmt die Werkstücke 12 an der zweiten Arbeitsposition vor dem Wanddurchbruch 22 auf, holt sie durch diesen hindurch auf die Rückseite der Wand 18 und legt sie an einer oder mehreren bestimmten Stellen, gegebenenfalls auf einem weiterführenden Transportorgan, ab.

## Patentansprüche

1. Vertikal arbeitende Werkzeugmaschine mit einem oder mehreren an einer Wand (18) geführten Werkzeugschlitten und Werkstücktransport zwischen wenigstens zwei Positionen auf der einen Seite der Wand mittels eines auf der anderen Seite der Wand gelagerten Handhabungsgeräts (26, 62) durch wenigstens zwei horizontal nebeneinander angeordnete Wanddurchbrüche (20, 22) hindurch, **dadurch gekennzeichnet,** daß das Handhabungsgerät (26, 62) einen um eine senkrechte Schwenkachse (34) drehbaren zweiteiligen Knickarm (32) aufweist, dessen Knickbewegung durch Zwangsführung (50, 52, 54) von seiner Drehbewegung abgeleitet ist und dessen Knickgelenk (42) sich beim Verfahren von einer zur anderen Position auf dem größeren Bogen des Kreises seiner Bahn bewegt, wobei der äußere Teil (40) des Knickarms (32) in den Endstellungen, in welchen er sich durch die Wanddurchbrüche (20, 22) erstreckt, im wesentlichen parallele Lagen einnimmt.

2. Werkzeugmaschine nach Anspruch 1, **dadurch gekennzeichnet,** daß der Knickarm (32) insgesamt oder sein äußerer Teil (40) axial bewegbar ist.

3. Werkzeugmaschine nach Anspruch 1 oder 2, **dadurch gekennzeichnet,** daß am äußeren Ende des Knickarms (32) ein um eine senkrecht zur Schwenkachse (34) liegende Achse drehbarer Werkstück-Greifer (24) gelagert ist.

4. Werkzeugmaschine nach Anspruch 1 oder 2, **dadurch gekennzeichnet,** daß sich auf derjenigen Seite der Wand (18), auf welcher der Knickarm (32) gelagert ist, eine oder mehrere weitere auf der Bewegungsbahn von dessen Greifer (24) liegende Haltepositionen des Werkstücktransports befinden.

5. Werkzeugmaschine nach Anspruch 4, **dadurch gekennzeichnet,** daß sich an einer der weiteren Positionen eine Einrichtung (60) zum Wenden der Werkstücke (12) befindet.

6. Werkzeugmaschine nach einem der vorhergehenden Ansprüche, **dadurch gekennzeichnet,** daß sich die Seitenflächen der Wanddurchbrüche (20, 22) entsprechend den Stellungen des Knickarms (32) beim Hindurchreichen durch die Wand (18) im Winkel zueinander erstrecken.

7. Werkzeugmaschine nach einem der Ansprüche 1 bis 6, **dadurch gekennzeichnet,** daß das Handhabungsgerät (26, 62) längs der Wand (18) verfahrbar ist.

8. Werkzeugmaschinen nach einem der Ansprüche 1 bis 6, **dadurch gekennzeichnet,** daß auf derselben Seite der Wand (18) zwei oder mehr Handhabungsgerate (62, 64) mit Knickarm (32) gelagert sind, und durch wenigstens einen Wanddurchbruch (22) zwei Knickarme (32) an dieselbe Arbeits- oder Lagerposition heranreichen.

9. Werkzeugmaschinen nach einem der Ansprüche 1 bis 6, **dadurch gekennzeichnet,** daß auf derselben Schwenkachse (34) zwei Knikkarme (32) gelagert sind.

10. Werkzeugmaschine nach einem der vorhergehenden Ansprüche, **dadurch gekennzeichnet,** daß zur Ableitung der Knickbewegung von der Schwenkbewegung des Knickarms (32) eine Kette (54) oder ein Zahnriemen ein undrehbar auf der Schwenkachse (34) festgehaltenes und ein drehfest an dem im Knickgelenk (42) gelagerten äußeren Teil (40) des Knikkarms (32) angeordnetes Zahnrad (50, 52) verbindet.

## Claims

1. A vertically operating machine tool having one or more tool carriages guided on a wall (18) and workpiece transfer between at least two positions on one side of the wall by means of a manipulator (26, 62) mounted on the other side of the wall through at least two wall openings (20, 22) disposed horizontally side by side, characterised in that the manipulator (26, 62) has a two-part articulated arm (32) whose articulating movement is derived from its rotating movement by constrained guidance (50, 52, 54) and whose articulation (42) in travelling from one position to the other moves on the major arc of the circle of its path, wherein the outer part (40) of the articulated arm (32) occupies substantially parallel positions in the end positions in which it extends through the wall openings (20, 22).

2. A machine tool according to Claim 1, characterised in that the entire articulated arm (32) or its outer part (40) is axially movable.

3. A machine tool according to Claim 1 or 2, characterised in that a workpiece gripper (24) rotatable about an axis lying perpendicular to the pivot axis (34) is mounted at the outer end of the articulated arm (32).

4. A machine tool according to Claim 1 to 2, characterised in that one or more further stopping positions of the workpiece transfer lying on the movement path of its gripper (24) are provided on that side of the wall (18) on which the articulated arm (32) is mounted.

5. A machine tool according to Claim 4, characterised in that means (60) for turning the workpieces (12) is situated at one of the further positions.

6. A machine tool according to any one of the preceding claims, characterised in that the lateral surfaces of the wall openings (20, 22) extend at an angle to one another corresponding to the positions of the articulated arm (32) when passing through the wall (18).

7. A machine tool according to any one of Claims 1 to 6, characterised in that the manipulator (26, 62) is movable along the wall (18).

8. A machine tool according to any one of Claims 1 to 6, characterised in that two or more manipulators (26, 62) with an articulated arm (32) are mounted on the same side of the wall (18), and two articulated arms (32) extend through at least one wall opening (22) at the same operating or deposit position.

9. A machine tool according to any one of Claims 1 to 6, characterised in that two articulated arms (32) are mounted on the same pivot axis (34).

10. A machine tool according to any one of the preceding claims, characterised in that to derive the articulating motion of the articulated arm (32) from its pivotal motion a chain (54) or a toothed belt connects a toothed wheel (50) located non-rotatably about the pivot axis (34) to a toothed wheel (52) arranged non-rotatably on the outer part (40) of the articulated arm (32) mounted at the articulation (42).

**Revendications**

1. Machine-outil travaillant verticalement comprenant un ou plusieurs chariots porte-outil guidés sur une paroi (18) et un transfert de pièces à usiner entre au moins deux positions sur l'une des faces de la paroi au moyen d'un manipulateur implanté de l'autre côté de la paroi (26, 62) à travers au moins deux échancrures (20, 22) de paroi disposées côte à côte, caractérisée en ce que l'appareil de manipulation (26, 62) présente un bras articulé (32) en deux parties pouvant tourner sur un axe de pivotement (34) perpendiculaire, dont le mouvement articulé résulte du guidage forcé (50, 52, 54) de son mouvement de rotation et dont l'articulation (42) se déplace d'une position à l'autre sur le grand arc de cercle de sa trajectoire, la pièce extérieure (40) du bras articulé (32) s'étendant dans les positions terminales, par les échancrures de paroi (20, 22), en prenant des positions essentiellement parallèles.

2. Machine-outil selon la revendication 1, caractérisée en ce que le bras articulé (32) est mobile globalement ou à sa partie extérieure (40) axialement.

3. Machine-outil selon la revendication 1ou la revendication 2, caractérisée en ce qu'on loge à l'extrémité exterieure du bras articulé (32) une griffe de saisie pour la pièce à usiner (24) rotative sur un axe perpendiculaire par rapport à l'axe de pivotement (34).

4. Machine-outil selon la revendication 1 ou la revendication 2, caractérisée en ce qu'il y a du même côté de la paroi (18) où est implanté le bras articulé (32), une ou plusieurs autres positions d'arrêt du transfert de pièces se trouvant sur la trajectoire de déplacement de sa griffe (24).

5. Machine-outil selon la revendication 4, caractérisée en ce qu'il y a, sur l'une des autres positions, un dispositif (60) pour tourner les pièces (12).

6. Machine-outil selon l'une des revendications précédentes, caractérisée en ce que les faces latérales des ·échancrures de paroi (20, 22) s'étendent à travers la paroi (18) en faisant un angle correspondant aux positions du bras articulé (32).

7. Machine-outil selon l'une des revendications 1 à 6, caractérisée en ce qu'on peut faire passer le manipulateur (26, 62) le long de la paroi (18).

8. Machine-outil selon l'une des revendications 1 à 6, caractérisée en ce qu'on loge du même côté de la paroi (18) deux ou plusieurs manipulateurs (62, 64) avec des bras articulés (32), et que par au moins une échancrure de paroi (22) deux bras articulés (32) parviennent à la même position de travail ou de pose.

9. Machine-outils selon l'une des revendications 1 à 6, caractérisée en ce qu'on loge deux bras articulés (32) sur le même axe de pivotement (34).

10. Machine-outil selon l'une des revendications précédentes, caractérisée en ce que pour transmettre le mouvement de pivotement par le mouvement de rotation du bras articulé (32), on relie par une chaîne (54) ou une courroie crantée une roue dentée (50) fixée sans pouvoir tourner sur l'axe de pivotement (34) et une autre (52) fixée solidaire en rotation de la pièce (40) extérieure logée dans l'articulation (42).

Fig. 1

EP 0 180 829 B1

# Fig. 2

Fig. 3